Europäisches Patentamt

(19) European Patent Office

Office européen des brevets

(11) **EP 0 695 606 A1**

(12) **EUROPEAN PATENT APPLICATION**

(43) Date of publication:
07.02.1996 Bulletin 1996/06

(51) Int. Cl.[6]: **B25J 9/16**, G05B 13/02, G05B 19/19

(21) Application number: 94830372.2

(22) Date of filing: 25.07.1994

(84) Designated Contracting States:
DE FR GB IT

(71) Applicant: **CONSORZIO PER LA RICERCA SULLA MICROELETTRONICA NEL MEZZOGIORNO
I-95121 Catania (IT)**

(72) Inventors:
• **Giudice, Gaetano
95026 Acitrezza (Catania) (IT)**

• **Lo Presti, Matteo
95045 Misterbianco (Catania) (IT)**
• **Fortuna Luigi,
90600 Siracusa (IT)**

(74) Representative: **Modiano, Guido, Dr.-Ing. et al
I-20123 Milano (IT)**

(54) **Fuzzy control process and device for positioning and quickly damping mechanical oscillations**

(57)    A fuzzy control process for positioning and quickly damping mechanical oscillations comprising the following steps: measuring a value of the position of a mechanical element (1); generating a position error ($E_y$) from the comparison between the position value (y) and a first reference value ($y_{ref}$); measuring a value (v) of the deformation of the mechanical element (1); generating a vibration error ($E_v$) from the comparison between the deformation value (v) and a second reference value ($v_{ref}$); generating the derivative ($dE_y/dt$) of the position error. The particularity of the invention resides in the fact that it comprises the additional steps of: generating the derivative ($dE_v/dt$) of the vibration error ($E_v$); applying a fuzzy control to the position error ($E_y$), to the vibration error ($E_v$), to the derivative ($dE_y/dt$) of the position error, and to the derivative ($dE_v/dt$) of the vibration error, so as to generate a control signal (u) that is suitable to drive means (2) for actuating the mechanical element (1).

FIG. 6

## Description

The present invention relates to a fuzzy control process and device for positioning and quickly damping mechanical oscillations.

As is known, in the field of robotics it is generally necessary to have a flexible system when lightweight materials are used. In this case, in addition to all the advantages that arise from a decrease in the weight of the materials, there is the disadvantage that the system loses part of its rigidity, introducing oscillations that are detrimental in terms of positioning precision.

In order to improve the performance of positioning systems it is therefore necessary to perform a robust control that is capable of performing both position control and quick damping of oscillations.

Known methods adopted for these two types of control (position control and quick damping) are typically different and are implemented on microcontrollers or on highly sophisticated DSPs.

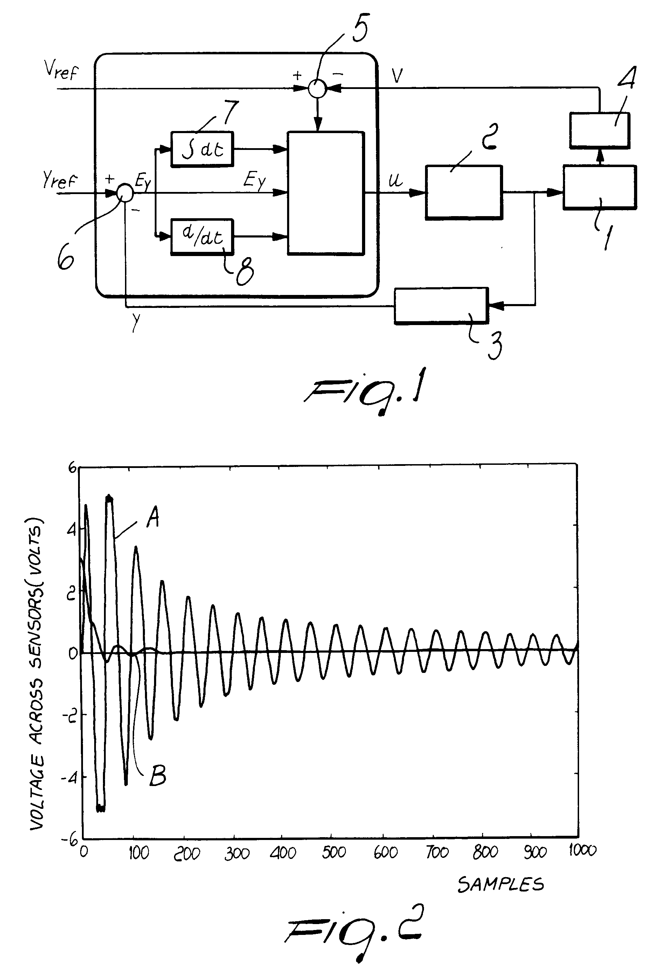

Figure 1 illustrates a known system of the PID (proportional-integral-derivative) type for controlling a flexible arm. The reference numeral 1 designates a flexible arm that is driven by a motor unit 2.

Two sensors are associated with the flexible arm 1: a first sensor for detecting the arm position, typically constituted by a potentiometer 3, and a second sensor, typically constituted by a piezoelectric sensor 4, for measuring the variation in the deformation of the arm 1 (i.e. its oscillations).

The value v measured by the sensor 4 is sent to a first comparator 5 suitable to generate an oscillation error signal $E_v$ from the comparison between the oscillation value v measured by the sensor 4 and a reference value $v_{ref}$.

The value y of the angular position of the arm 1, measured by the position sensor 3, is instead sent to a second comparator 6 suitable to generate a position error signal $E_y$ from the comparison between the value of the angular position y measured by the sensor 3 and a reference value $y_{ref}$.

Both reference signals are equal to zero, since oscillations and angular movements of the flexible arm 1 are to be avoided.

The position error signal $E_y$ is sent to an integrator 7 and to a derivative circuit 8. The error signal $E_y$, the output of the derivative circuit 8, i.e. its derivative $dE_y/dt$ of the error signal, and the output of the integrator 7, i.e. the integral $\int E_y dt$, are sent to a controller 9 of the known type.

The controller 9 also receives the oscillation error signal $E_v$. The controller 9 is suitable to generate a control signal u on the basis of the values of the errors $E_v$, $E_y$, of the derivative $dE_y/dt$, and of the integral $\int E_y dt$; said control signal u is sent to the motor unit 2 which is in turn suitable to drive the flexible arm 1.

The above described known controller is provided according to the following criterion:

$$u(k)=k_p \cdot E_y(k) + k_d \cdot [(E_y(k) - E_y(k-1))/T]+T/k_i \cdot \int E_y(k)+k_v \cdot E_v$$

where (u)k is the output of the controller 9, T is the sampling interval (the time elapsing between the acquisition of the input values and the generation of the output values), $k_p$ is the parameter of the error signal $E_y$, $k_d$ is the parameter of the derivative $dE_y/dt$, $k_i$ is the parameter of the integral $\int E_y dt$, and $k_v$ is the parameter of the error $E_v$.

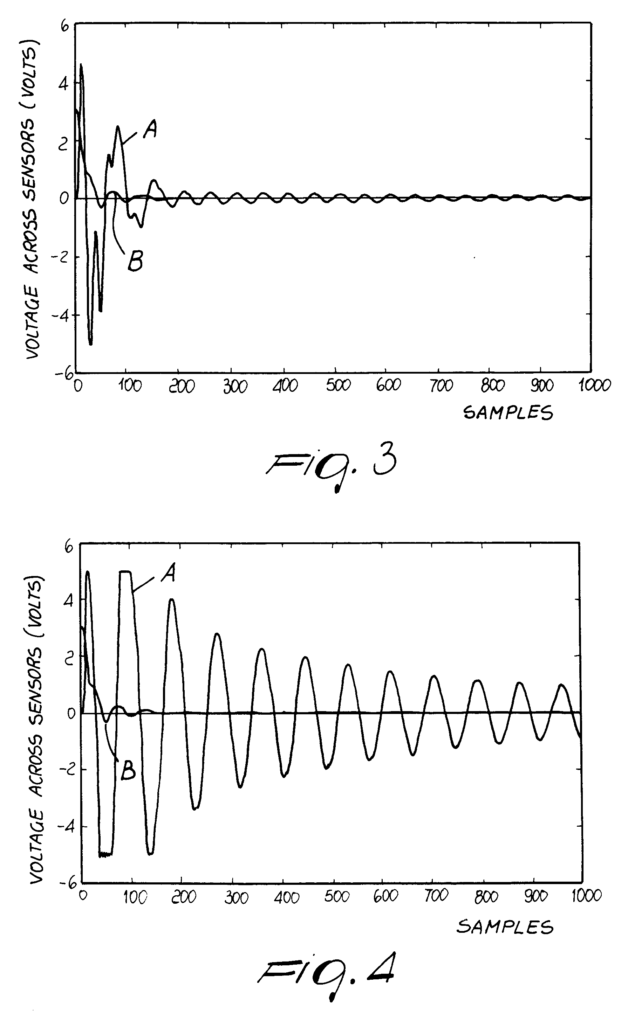

Figure 2 illustrates the output of the system controlled with an above described controller. The integral part of the control is of the anti-windup type with a threshold s=0.5 volts and T=4 ms. The parameters have been chosen as follows: $k_p$ = 1.1; $k_d$ = 0.05; $1/k_i$ = 200; and $k_v$ = 0.5.

The output of such a system can be seen in figure 2, which shows the output of the conventional PID system without vibration control. Curve A plots the trend of the vibrations, measured by the sensor 4, whereas curve B plots the trend of angular motions, i.e. of position, measured by the sensor 3. For both curves the reference values is zero. As shown by the vibration curve A, the system has vibrations even after 1000 samples have been taken (4 s).

Figure 3 shows the output of the conventional PID system with vibration control. As clearly shown by a comparison with figure 2, the vibrations decrease considerably already after 300 samples have been taken (1.2 seconds). However, the vibrations persist even after 1000 samples have been taken.

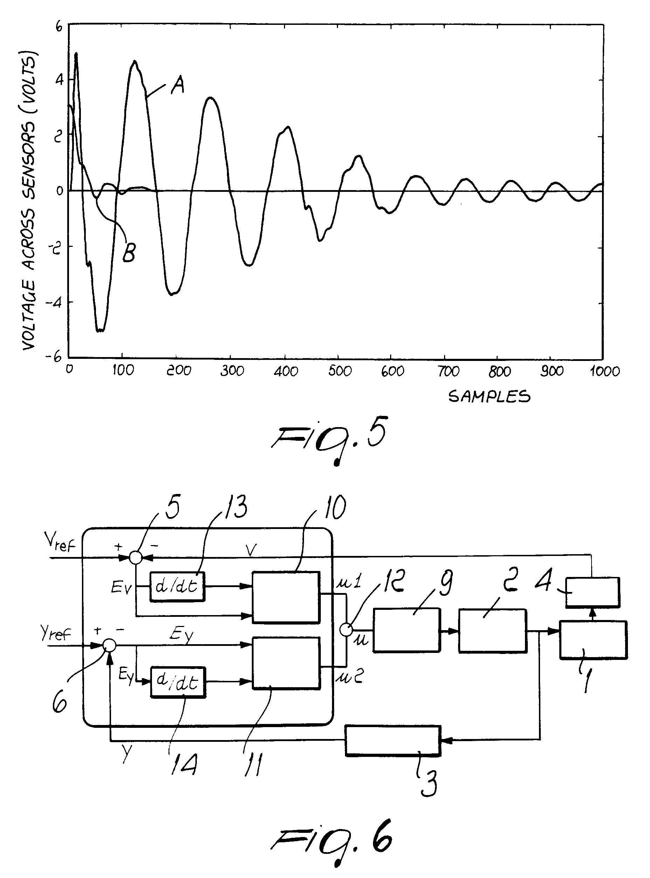

Figures 4 and 5 plot the corresponding outputs of figures 2 and 3, with the difference that a weight is placed on the tip of the rod of the mechanical arm 1. The other parameters remain the same. As shown by figure 4, where there is no vibration control the vibrations are even stronger than in figure 2. Figure 5 shows that where vibration control is present, the vibrations decrease but their presence is nonetheless considerable.

Furthermore, it is evident that these systems nonetheless have considerable limitations due to the complexities and nonlinearities that are present in systems such as those being considered. It should also be noted that the computational complexity of efficient control algorithms requires very high calculation precisions, and therefore it is necessary to implement these algorithms on 16- or 32-bit systems.

A principal aim of the present invention is to provide a fuzzy control process for positioning and quickly damping mechanical oscillations that can perform both position control and dynamic damping of oscillations.

Within the scope of this aim, an object of the present invention is to provide a process that can perform robust control.

Another object of the present invention is to provide a process that is faster and more efficient than conventional systems.

Another object of the present invention is to provide a process that is simpler than known systems.

Another object of the present invention is to provide a process that is highly reliable, relatively easy to manufacture, and at low costs.

This aim, these objects and others which will become apparent hereinafter are achieved by a fuzzy control process for positioning and quickly damping mechanical oscillations that comprises the following steps:

measuring a value of the position of at least one mechanical element;

generating a position error from the comparison between said position value and a first reference value;

measuring a value of the deformation of said at least one mechanical element;

generating a vibration error from the comparison between said deformation value and a second reference value;

generating the derivative of said position error; characterized in that it comprises the additional steps of:

generating the derivative of said vibration error;

applying a fuzzy control to said position error, to said vibration error, to said derivative of said position error, and to said derivative of said vibration error, so as to generate a control signal suitable to drive means for actuating said at least one mechanical element.

The characteristics and advantages of the invention will become apparent from the description of a preferred but not exclusive embodiment, illustrated only by way of non-limitative example in the accompanying drawings, wherein:

figure 1 is a block diagram of a system driven with a conventional PID control device;

figure 2 plots the output of the same system driven with the conventional PID process without vibration control;

figure 3 plots the output of the same system driven with the conventional PID process with vibration control;

figure 4 plots the output of the system with a weight placed on the tip of the rod and driven with the conventional PID process without vibration control;

figure 5 plots the output of the same system with a weight placed on the tip of the rod, driven with the conventional PID process with vibration control;

figure 6 is a block diagram of the device for performing the process according to the present invention;

figure 7a plots the membership functions for the errors generated in the system driven with the process according to the present invention;

figure 7b plots the membership functions for the variations of the errors generated in the system driven with the process according to the present invention;

figure 7c plots the membership functions for the outputs of the fuzzy controllers of the device for performing the process according to the present invention;

figure 8 plots the output of the system to which the process according to the present invention is applied, without vibration control;

figure 9 plots the output of the system to which the process according to the present invention is applied, with vibration control;

figure 10 plots the output of the system with a weight placed on the tip of the rod and driven with the process according to the present invention, without vibration control;

figure 11 plots the output of the system with a weight placed on the tip of the rod and driven with the process according to the present invention, with vibration control.

Figure 6 illustrates the device for embodying the present invention. Like the PID control system, the device according to the present invention includes a flexible arm 1 which is driven by a motor unit 2. An oscillation sensor 4 and a position sensor 3 are associated with the arm 1.

The signal y measured by the position sensor 3 is sent to the comparator 6, which is suitable to generate a position error signal $E_y$ from the comparison between the signal y and a reference signal $y_{ref}$. Likewise, the signal v measured by the sensor 4 is sent to a second comparator 5 which is suitable to generate a vibration error signal from the comparison between the signal v and a reference signal $V_{ref}$.

The reference values are normally set to zero.

The vibration error $E_v$ is sent to a derivative circuit 13 suitable to calculate the derivative $dE_v/dt$ of said error. The derivative circuit 13 determines the variation of the error $E_v$ from the comparison of the values of $E_v$ at two successive instants $E_v(t)-E_v(t-1)$.

The error $E_v$ and its derivative $dE_v/dt$ are then sent to a first fuzzy vibration controller 10 which is part of the fuzzy control means of the device according to the present invention.

Likewise, the position error $E_y$ is sent to a derivative circuit 14 which is suitable to calculate the derivative $dE_y/dt$ of said error. The derivative circuit 14 determines the variation of the error $E_y$ from the comparison of the values of $E_y$ in two successive instants $E_y(t)-E_y(t-1)$.

3

The error $E_y$ and its derivative $dE_y/dt$ are then sent to a second fuzzy position controller 11 which is also part of the fuzzy control means of the device according to the present invention.

The fuzzy controllers 10 and 11 respectively have outputs u1 and u2. Said output signals are added at an adder node 12 so as to obtain a control signal u which is sent to amplifier means 9. The amplifier means 9 convert the control signal u into a form that is suitable to drive the means for actuating the arm 1, i.e. the motor unit 2.

The fuzzy vibration controller 10 comprises memory means suitable to store membership functions for the input fuzzy variables: for the vibration error signal $E_v$ and for its derivative $dE_v/dt$. Likewise, the fuzzy position controller 11 also comprises respective memory means for storing membership functions defined for the input fuzzy variables: for the position error $E_y$ and for its derivative $dE_y/dt$.

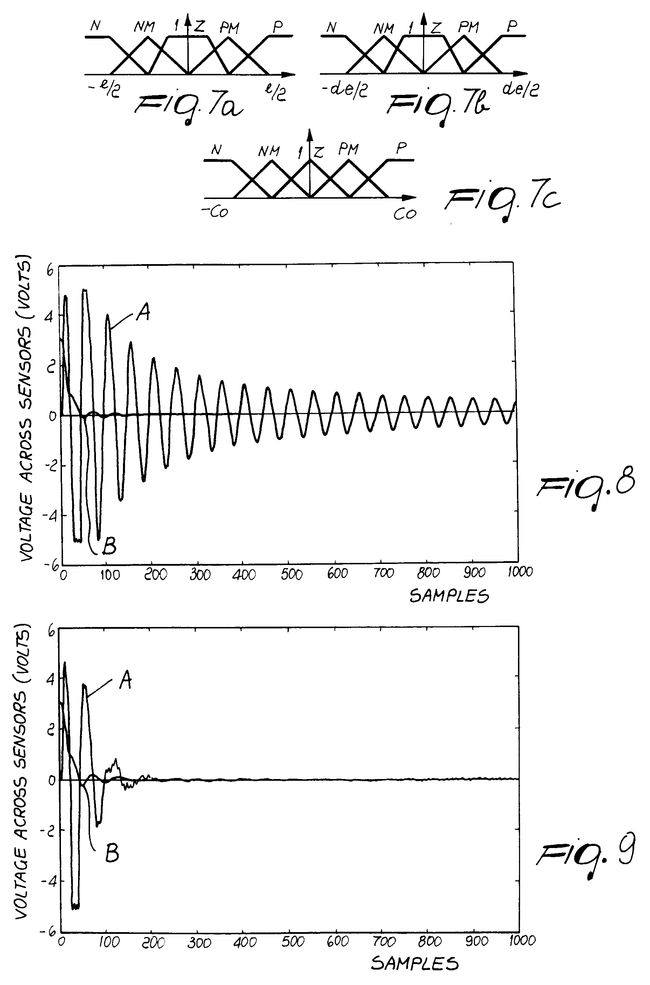

The membership functions for the present invention have been developed as shown in figures 7a, 7b and 7c. Since the form of the membership functions for the two input fuzzy variables and the output fuzzy variable are identical for the two controllers, only one term set for the error variables $E_y$ and $E_v$, one term set for the variables of the derivative $dE_y/dt$ and $dE_v/dt$, and one term set for the output variables u1 and u2 are shown.

Considering the fuzzy vibration controller 10, the fuzzy sets for the fuzzy variable $E_v$ have been defined as N - Negative, NM - Negative Medium, Z - Zero, PM - Positive Medium, P - Positive. The universe of discourse has been defined as lying between -e/2 and e/2. In the illustrated example, the universe of discourse has been defined as e = 0.5.

The term set developed for the input variable $E_y$ of the position controller 11 is identical in form to the term set of the variable $E_v$. The universe of discourse has been defined as e = 5.5.

With reference to figure 7b, a term set for the derivative $dE_v/dt$ has been developed in a manner similar to the term set for the vibration error $E_v$. The fuzzy sets are identical to those of the error $E_v$ (N, NM, Z, PM, P). The universe of discourse has been defined as lying between -de and de. For the example shown, the universe of discourse has been defined as de = 5.

The term set for the derivative $dE_y/dt$ of the position error is identical to the term set of the derivative $dE_v/dt$. The universe of discourse has been defined as lying in the range de = 0.8.

The term set for the outputs u1 and u2 of the fuzzy controllers 10 and 11 is identical and is shown in figure 7c. As in the preceding cases, there are five fuzzy sets (N, NM, Z, PM, P), but the fuzzy sets have a slightly different form with respect to those of the input fuzzy variables. In the case of the fuzzy vibration controller 10, the universe of discourse has been defined in the range co = 0.5, and in the case of the fuzzy position controller co is 5.

It is evident that the values of the universes of discourse have been given by way of example and may be any according to the configurations of the system to be controlled.

A set of fuzzy rules is stored in the memory means of the fuzzy controllers, and the data measured in input to the controllers and the related membership functions are applied to these rules. The fuzzy rules are developed from the technical knowledge available on the system: the experience of technicians and/or characteristic equations.

The fuzzy rules are identical for both controllers and are given by the following table:

$$(dE_v/dt) \text{ or } (dE_y/dt)$$

|          |     | N  | NM | Z  | PM | P  |
|----------|-----|----|----|----|----|----|
|          | N   | N  | N  | N  | NM | P  |
| $E_v$    | NM  | N  | N  | NM | PM | P  |
| or       | Z   | N  | NM | Z  | PM | P  |
| $E_y$    | PM  | N  | NM | PM | P  | P  |
|          | P   | N  | NM | P  | P  | P  |

The table is to be interpreted as follows. With reference to the first row and the first column, for the error $E_y$ one obtains:

IF $E_y$ IS N AND $dE_y/dt$ IS N THEN u2 IS N

With reference to the third column and the second row, one obtains:

IF $E_y$ IS NM AND $dE_y/dt$ IS Z THEN u2 IS NM

All the positions of the table (including those for the error $E_v$ and the corresponding derivative $dE_v/dt$) are interpreted in the same manner.

The inputs of the controllers 10 and 11, after being appropriately fuzzified, i.e. converted into membership functions, are sent to the rules to be compared with the premises (the IF parts) stored in the memory of each one of the fuzzy controllers 10 and 11. Multiple rules are combined simply by means of a fuzzy union operation on the membership functions that are the result of each rule.

The fuzzy inference occurs in the inference means of the controllers 10 and 11 in the manner described hereinafter.

The rules given above have the following general form:

IF [(A is A1)] AND (B is B1)] THEN (C1 IS $C_1$)

The part of each rule before THEN is commonly termed "left part" or "antecedent", whereas the part after THEN is termed "consequent" or "right part".

Conceptually, the better the equalization of the inputs with the membership function of a stored rule, the higher the influence of said rule in overall computation.

In order to determine this equalization, weight functions which identify some particularly indicative values are determined. One of these weight functions is the function $\alpha$, which indicates the extent to which the input propositions (A1, B1) match the stored premises (A, B). In the example of the above generic rule the function $\alpha$ is given as

$$\alpha_i A = max ( min(A1,A_i))$$

$$\alpha_i B = max ( min(B1,B_i))$$

for i = 1, 2, 3 (number of rules).

The second weight function is $\Omega_i$, which indicates the extent of the "general resemblance" of the IF part of a rule. For the above example, the function $\Omega_i$ is calculated as

$$\Omega_i = min( \alpha_i A, \alpha_i B, ...)$$

for i equal to the number of rules and with as many items inside the parenthesis as there are propositions (the IF part) of each rule. As an alternative to the above membership function, a weight function equal to the product of the individual membership values is usually used:

$$\Omega_i = \alpha_i A \times \alpha_i B$$

These values, which in practice define the activation value of the antecedent of the fuzzy inference, are used subsequently to calculate the activation value of the consequent (i.e. of the right part).

As far as this subject is concerned, two different inference methods are generally considered: MAX/DOT and MAX/MIN. Essentially, both methods act by modifying the membership functions of the consequent by means of a threshold value supplied by the antecedent.

The MAX/MIN method acts by clipping the membership functions related to the consequent. As regards the input values, one uses the corresponding lower (threshold) membership value with which the membership function of the output is clipped. In practice, the membership function in output will have no value higher than the threshold value.

The MAX/DOT method instead acts by modifying the membership functions of the right part (the consequent), so that the membership function of the output is "compressed", while however trying to maintain its original shape as much as possible.

In the case of fuzzy control it is possible to simplify the calculation of the weights $\alpha$. It is in fact possible to considerably reduce the amount of calculation by assuming that one is dealing with a degenerate case of fuzzy calculus in which the input variables are not fuzzy sets (ambiguous values) but are variables which generally originate from sensors and are thus definite numeric values. The input data are not fuzzy sets but crisp values.

In order to represent these values within a fuzzy system, they must be converted into crisp membership functions, i.e. into particular membership functions which have an activation value of 1 ("TRUE") at the point which corresponds to the value provided in input. Equally, these crisp values have a zero ("FALSE") value in the remaining part of the definition range.

In order to convert a physical value, provided for example by an external sensor, into a fuzzy value, it is thus sufficient to assign the maximum truth value that is characteristic of the system to the point of the definition range that is identified by the measured value.

Calculation of the weights $\alpha$ in the presence of the crisp values ($E_y$, $E_v$, $dE_y/dt$, $dE_v/dt$) which occur in the case of the present invention becomes merely a matter of finding the intersection $\alpha_B$ and $\alpha_A$ of the input variables with the membership functions imposed by the term sets A and B.

The weights thus computed are used for computation on the consequent of the fuzzy inference (i.e. on the fuzzy rules). The weights are calculated by the calculation means of the fuzzy controllers 10 and 11.

In the case of the present invention, the outputs of the fuzzy controllers 10 and 11 must be physical values u1 and u2. Generally, once the inference has been performed on the right part of the fuzzy rules, one obtains a fuzzy set of the output value u1 or u2; it is accordingly necessary to defuzzify, i.e. to extract a definite numeric value of u1 and u2 from the calculated fuzzy set. Defuzzification occurs in the defuzzification means of the fuzzy controllers 10 and 11.

It is possible to use various defuzzification methods, such as for example the centroid method, the maximum height method, etc. In practice, for reasons related to numeric precision it is possible to use the centroid method, according to which (in this case for the output of the fuzzy controller 10):

$$u1 = \frac{\displaystyle\sum_{i=1}^{n} \Omega_i \cdot c_i}{\displaystyle\sum_{1}^{n} \Omega_i}$$

where n is the number of rules and C represents the centroids (centers of gravity) of the membership functions of the consequents of each rule, appropriately modified by using the MAX/MIN or MAX/DOT method. The functions $\Omega$ are determined as described earlier, using either the minimum among the functions $\alpha$ or the product thereof. This computational model is referenced as the MAMDANI computational model. As an alternative, it is also possible to use another alternative fuzzy computational model, referenced as SUGENO model, in which defuzzification is performed simply by means of the following rule (in this case, too, for the output of the fuzzy controller 10):

$$u1 = \sum_{i=1}^{n} \Omega_i \cdot \alpha_i$$

In the above equation, $\Omega_0$ is always equal to 1. In practice, the defuzzified value is determined by a linear combination of the activation values of each individual rule.

In the above described manner it is possible to generate real values, i.e. crisp values, of the individual outputs u1 and u2 of the controllers 10 and 11. These outputs, as mentioned, are added at the adder node 12 to obtain an individual control value u for the motor unit 2. The motor unit 2, in turn, is suitable to drive the flexible arm 1.

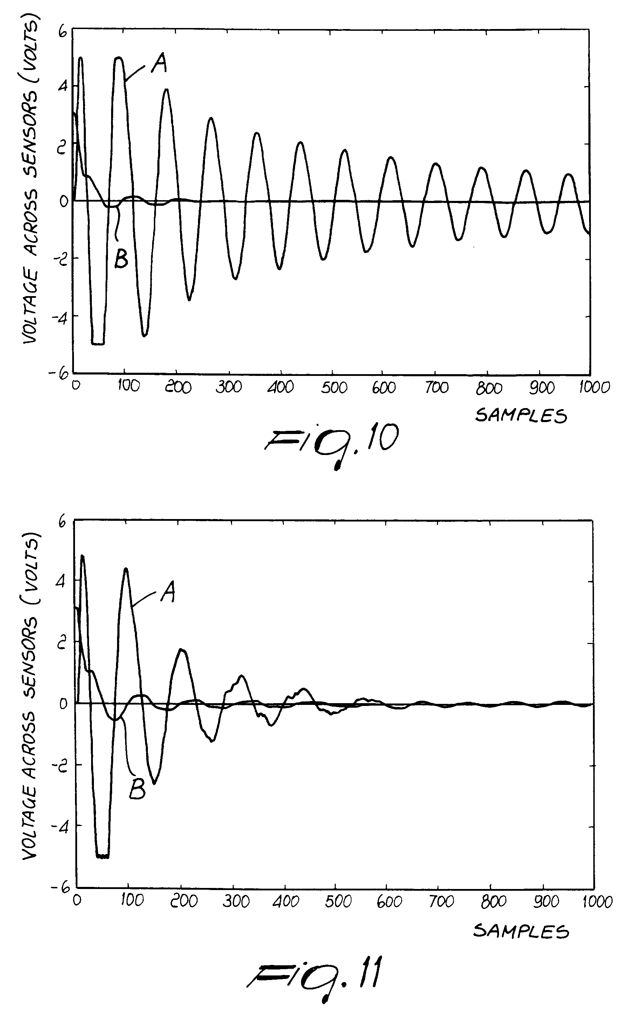

Figures 8 to 11 plot the results obtained with the control according to the present invention.

Figure 8 plots the output of the system controlled with the process according to the present invention without vibration control. The output corresponds to the output of the conventional PID system without vibration control (figure 2).

Figure 9 instead illustrates the output of the system controlled according to the process described in the present invention with vibration control. It can be seen that the difference with respect to the PID system (figure 3) is considerable. Vibrations are practically reduced to the reference value (zero volts) after three oscillations (200 samples).

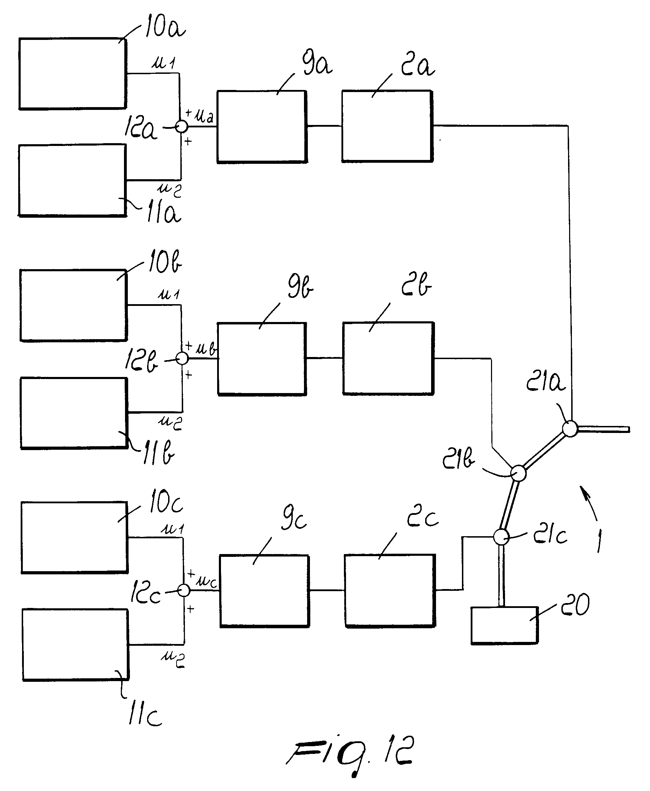

Figure 10 plots the output of the system, without vibration control, with a weight placed on the tip of the rod of the flexible arm 1. The output corresponds to the output of the PID system without vibration control (figure 4).

Figure 11 instead plots the output of the system with vibration control and with the weight placed on the rod of the arm 1. It can be seen that in this case, too, the difference with respect to the conventional PID system is considerable. The oscillations of the arm 1 in fact stabilize at practically zero after only six cycles.

Accordingly, the advantages of the control process according to the present invention are considerable. As far as this subject is concerned, it is specified that the weight of the bare rod exceeds 20 g, whereas the additional weight exceeds 10 g, i.e. approximately 50% of the weight of the rod itself.

To conclude, it can be noted that the control process according to the present invention is able to implement a robust control criterion that can eliminate vibrations introduced by lightweight materials both in nominal operating conditions and in the presence of noise and parametric variations. It should be noted that in addition to the advantages obtained in terms of performance, there is the undisputed advantage arising from the computational simplicity of a fuzzy algorithm.

This type of control can be implemented both on a dedicated system and on a standard 8-bit microcontroller, since it is not necessary to resort to a 16- or 32-bit machine.

Furthermore, the fact of having two fuzzy control sections, one for vibrations and one for position, has considerable advantages in formulating the control action and thus allows to obtain a simple and reliable control criterion.

The invention thus conceived is susceptible to numerous modifications and variations, all of which are within the scope of the inventive concept.

Thus, for example, the above example is valid for a system having a single degree of freedom (for example the angular positioning of a flexible arm 1). The present invention can be applied to systems having multiple degrees of freedom. In the case of three degrees of freedom, the process has fuzzy control means for each individual articulation. Figure 12 shows such a system. The flexible arm 1 has three articulations 21a, 22b, and 22c which are typically mounted on a robot 20. Each articulation is driven by the corresponding fuzzy control means. Thus, for example, the articulation 21b is driven by the two controllers 10b (vibrations) and 11b (position), by the amplifier 9b, and by the motor unit 2b.

Finally, all the details may be replaced with other technically equivalent ones.

In practice, the materials employed, as well as the shapes and dimensions, may be any according to the requirements without thereby abandoning the protective scope of the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Fuzzy control process for positioning and quickly damping mechanical oscillations that comprises the following steps:

    measuring a value ($y$) of the position of at least one mechanical element (1);

    generating a position error ($E_y$) from the comparison between said position value ($y$) and a first reference value ($y_{ref}$);

    measuring a value of the deformation ($v$) of said at least one mechanical element (1);

    generating a vibration error ($E_v$) from the comparison between said deformation value ($v$) and a second reference value ($v_{ref}$);

    generating the derivative ($dE_y/dt$) of said position error;

    characterized in that it comprises the additional steps of:

    generating the derivative ($dE_v/dt$) of said vibration error ($E_v$);

    applying a fuzzy control to said position error ($E_y$), to said vibration error ($E_v$), to said derivative ($dE_y/dt$) of said position error, and to said derivative ($dE_v/dt$) of said vibration error, so as to generate a control signal ($u$) that is suitable to drive means (2) for actuating said at least one mechanical element (1).

2. Process according to claim 1, characterized in that said fuzzy control application step consists in applying a first fuzzy control (11) to said position error ($E_y$) and to said derivative ($dE_y/dt$) of said position error, so as to generate a first output signal ($u2$), and

    in applying a second fuzzy control (10) to said vibration error ($E_v$) and to said derivative ($dE_v/dt$) of said vibration error, so as to generate a second output signal ($u1$),

    said first ($u2$) and said second ($u1$) output signals being added so as to generate said control signal ($u$).

3. Process according to one or more of the preceding claims, characterized in that said application of said first fuzzy control comprises the following steps:

    defining membership functions for said position error ($E_y$);

    defining membership functions for said derivative ($dE_y/dt$) of said position error;

    defining membership functions for said first output signal ($u2$);

    defining fuzzy rules for said membership functions;

    calculating activation values for said fuzzy rules;

    applying said fuzzy rules to said measured values of said position error and said derivative of said position error;

    defuzzifying the values obtained with said application of said fuzzy rules, so as to obtain real values of said first output signal ($u2$).

4. Process according to one or more of the preceding claims, characterized in that said application of said first fuzzy control comprises the following steps:

    defining membership functions for said vibration error ($E_v$);

    defining membership functions for said derivative ($dE_v/dt$) of said vibration error;

    defining membership functions for said second output signal ($u1$);

defining fuzzy rules for said membership functions;

calculating activation values for said fuzzy rules;

applying said fuzzy rules to said measured values of said vibration error ($E_v$) and said derivative ($dE_v/dt$) of said vibration error;

defuzzifying the values obtained with said application of said fuzzy rules so as to obtain real values of said second output signal (u1).

5. Process according to one or more of the preceding claims, characterized in that a separate fuzzy control (10a-c, 11a-c) is applied for each one of said at least one mechanical element (1).

6. Process according to the preceding claims, characterized in that it comprises one or more of the described and/or illustrated features.

7. Fuzzy control device for positioning and quickly damping mechanical oscillations, comprising:

means (3) for measuring a value (y) of the position of at least one mechanical element (1);

first comparison means (6) which are suitable to generate a position error ($E_y$) from the comparison between said position value (y) and a first reference value ($y_{ref}$);

means (4) for measuring a value (v) of the deformation of said at least one mechanical element (1);

second comparison means (5) which are suitable to generate a vibration error ($E_v$) from the comparison between said deformation value (v) and a second reference value ($v_{ref}$);

first differential means (14) which are suitable to generate the derivative ($dE_y/dt$) of said position error;

characterized in that it comprises:

second differential means (13) which are suitable to generate the derivative ($dE_v/dt$) of said vibration error;

fuzzy control means (10, 11) which are suitable to apply a fuzzy control to said position error ($E_y$), to said vibration error ($E_v$), to said derivative ($dE_y/dt$) of said position error, and to said derivative ($dE_v/dt$) of said vibration error, so as to generate a control signal (u) that is suitable to drive means (2) for actuating said at least one mechanical element (1).

8. Device according to claim 7, characterized in that said fuzzy control means comprise:

first fuzzy control means (14) which are suitable to apply a first fuzzy control to said position error ($E_y$) and to said derivative ($dE_y/dt$) of said position error so as to generate a first output signal (u2); and

second fuzzy control means (13) which are suitable to apply a second fuzzy control to said vibration error ($E_v$) and to said derivative ($dE_v/dt$) of said vibration error so as to generate a second output signal (u1), and

an adder node (12) that is suitable to add said first (u2) and second (u1) output signals so as to generate said control signal.

9. Device according to one or more of the preceding claims, characterized in that said first fuzzy control means (14) comprise:

first memory means suitable to store membership functions for said position error ($E_y$), for said derivative ($dE_y/dt$) of said position error, and for said first output signal (u2);

second memory means suitable to store fuzzy rules for said membership functions;

calculation means suitable to calculate activation values for said fuzzy rules;

fuzzy inference means suitable to apply said fuzzy rules to said measured values of said position error ($E_y$) and said derivative ($dE_y/dt$) of said position error;

defuzzification means suitable to defuzzify the values obtained with said application of said fuzzy rules so as to obtain real values of said first output signal (u2).

10. Device according to one or more of the preceding claims, characterized in that said second fuzzy control means (13) comprise:

first memory means suitable to store membership functions for said vibration error ($E_v$), for said derivative ($dE_v/dt$) of said vibration error, and for said second output signal (u1);

second memory means suitable to store fuzzy rules for said membership functions;

calculation means suitable to calculate activation values for said fuzzy rules;

fuzzy inference means suitable to apply said fuzzy rules to said measured values of said vibration error ($E_v$) and said derivative ($dE_v/dt$) of said vibration error;

defuzzification means suitable to defuzzify the values obtained with said application of said fuzzy rules so as to obtain real values of said second output signal (u1).

11. Device according to one or more of the preceding claims, characterized in that separate fuzzy control means (10a-c, 11a-c) are applied to each one of said at least one mechanical element.

Fig.1

Fig.2

Fig. 3

Fig. 4

Fig. 5

Fig. 6

*Fig. 7a*

*Fig. 7b*

*Fig. 7c*

*Fig. 8*

*Fig. 9*

Fig.10

Fig.11

14

Fig. 12

EP 0 695 606 A1

**European Patent Office**

# EUROPEAN SEARCH REPORT

Application Number

EP 94 83 0372

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 049 797 (PHILLIPS)<br>* abstract; column 5, line 61 - column 7, line 53; column 8, line 22 - column 14, line 51; figures 1, 3-18 * | 1,7 | B25J9/16<br>G05B13/02<br>G05B19/19 |
| A | EP-A-0 523 252 (FANUC LTD)<br>* abstract; page 3, line 9 - page 4, line 27; page 7, lines 7 - 17; claims 1-7, figures 1, 2 * | 1,7 | |
| A | EP-A-0 402 849 (HITACHI, LTD.)<br>* abstract; page 3, line 34 - page 6, line 27; figures 1 - 5 * | 1,7 | |
| A | US-A-5 206 566 (YOSHIDA ET AL.)<br>* abstract; column 2, lines 43 - 68; column 3, line 38 - column 11, line 14; figures 1 - 10 * | 1,7 | |
| A | PROCEEDINGS IEEE INTERNATIONAL SYMPOSIUM ON INTELLIGENT CONTROL, 25 August 1993, CHICAGO, ILLINOIS, USA<br>pages 250 - 254<br>ARCINIEGAS ET AL. 'Fuzzy Inference and the Control of Flexible Robotic Manipulators'<br>* whole document * | 1 | **TECHNICAL FIELDS SEARCHED (Int.Cl.6)**<br><br>G05D<br>B25J<br>G05B |
| A | PROCEEDINGS IEEE INTERNATIONAL CONFERENCE ON ROBOTICS AND AUTOMATION, 4 May 1993, ATLANTA, GEORGA, USA<br>pages 236 - 241<br>KUBICA ET AL. 'A FUZZY CONTROL STRATEGY FOR A FLEXIBLE SINGLE LINK ROBOT'<br>* whole document *<br>---<br>-/-- | 1 | |

The present search report has been drawn up for all claims

| Place of search | Date of completion of the search | Examiner |
|---|---|---|
| BERLIN | 1 December 1994 | Beitner, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

16

European Patent Office

**EUROPEAN SEARCH REPORT**

Application Number

EP 94 83 0372

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | MECHATRONICS, vol.3, no.4, August 1993, OXFORD GB pages 451 - 464 A. T. WU ET AL. 'COMPARISON OF FUZZY LOGIC AND SELF-TUNING ADAPTIVE CONTROL OF SINGLE-LINK FLEXIBLE ARM' * whole document * | 1 | |

TECHNICAL FIELDS SEARCHED (Int.Cl.6)

The present search report has been drawn up for all claims

| Place of search | Date of completion of the search | Examiner |
|---|---|---|
| BERLIN | 1 December 1994 | Beitner, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)